## Européisches Patentamt

**European Patent Office**

**Office européen des brevets**

⑪ Numéro de publication : **0 006 775**
**B1**

⑫ **FASCICULE DE BREVET EUROPÉEN**

④⑤ Date de publication du fascicule du brevet :
30.09.81

㉑ Numéro de dépôt : **79400334.3**

㉒ Date de dépôt : **28.05.79**

(51) Int. Cl.³ : **C 04 B 21/12, C 04 B 13/00,**
**C 21 C 7/00, C 22 B 9/00**

(54) **Pièces réfractaires perméables aux gaz.**

㉚ Priorité : **26.06.78 FR 7819001**

㊸ Date de publication de la demande :
**09.01.80 (Bulletin 80/01)**

㊺ Mention de la délivrance du brevet :
**30.09.81 Bulletin 81/39**

㊴ Etats contractants désignés :
**BE DE FR GB IT LU NL SE**

㊶ Documents cités :
   **FR - A - 1 344 240**
   **FR - A - 1 541 453**
   **FR - A - 2 353 354**
   **FR - A - 2 359 090**
   **FR - A - 2 390 400**
   **US - A - 3 053 525**

㊳ Titulaire : **SOCIETE EUROPEENNE DES PRODUITS REFRACTAIRES**
**67, Boulevard du Château**
**F-92200 Neuilly-sur-Seine (FR)**

㊷ Inventeur : **Kiehl, Jean-Pierre**
**2, Rue Constant**
**F-69003 Lyon (FR)**
Inventeur : **Remi, Jean-Pierre**
**1bis, Avenue du Château**
**F-69500 Bron (FR)**
Inventeur : **Schoennahl, Jacques Raymond Paul**
**10, Avenue de Villeneuve Libos**
**F-47500 Fumel (FR)**

㊴ Mandataire : **de Boisse, Louis**
**37, Avenue Franklin D. Roosevelt**
**F-75008 Paris (FR)**

Imprimerie Jouve, 17, rue du Louvre, 75001 Paris, France

Pièces réfractaires perméables aux gaz

Lors du traitement de métaux liquides et plus particulièrement de l'acier et de la fonte, certaines opérations métallurgiques demandent le brassage de la masse en fusion. Ce brassage peut être réalisé de différentes manières, par exemple, par effet électromagnétique, ou par l'introduction de fluides gazeux ou liquides au travers de tuyères ou de pièces réfractaires perméables.

La méthode la plus couramment utilisée consiste à souffler un gaz à travers des pièces réfractaires perméables logées dans le revêtement réfractaire du récipient, de préférence dans le fond. Afin d'éviter les fuites, les parois et le fond des pièces perméables sont rendus étanches par divers moyens, telle la présence d'une couche de réfractaire dense, solidaire du réfractaire perméable, ou d'une couche de métal déposée sur le réfractaire perméable, ou encore le plus souvent par une enveloppe en tôle d'acier.

Pendant leur utilisation, les pièces perméables subissent de nombreuses attaques : en plus des sollicitations habituelles auxquelles est soumis le revêtement entier, le réfractaire perméable doit résister aux chocs thermiques lors du passage des gaz, à l'action érosive du bain en mouvement et au décrassage et nettoyage après vidange du récipient.

En conséquence, les pièces perméables s'usent très rapidement et cela malgré l'emploi de matériaux hautement réfractaires tels que la magnésie ou l'alumine. Il en découle que la durée de vie des pièces perméables est généralement inférieure à celle du reste du revêtement. C'est ainsi que ces pièces sont considérées comme des points faibles dans le revêtement, d'autant plus qu'elles s'usent souvent de manière irrégulière et imprévisible.

Ces pièces perméables sont généralement faites en matériaux réfractaires frittés à base d'alumine ou de magnésie. L'inconvénient de ces pièces réside dans leur médiocre tenue aux brusques variations de température qui ont lieu chaque fois qu'un nouveau soufflage est effectué. On constate ainsi souvent que les pièces réfractaires perméables frittées s'écaillent et se perdent dans le laitier.

On peut pallier cet inconvénient en remplaçant les réfractaires frittés par des pièces en béton réfractaire perméable, généralement à base d'alumine frittée ou électrofondue et de ciment super-alumineux du type « Sécar 250 ».

Le brevet des Etats-Unis d'Amérique n° 3 053 525 décrit des pièces réfractaires perméables de ce genre comprenant un cœur poreux composé d'un agrégat, tel qu'une chamotte ou de l'alumine, d'une grosseur de particules non inférieure à 0,2 mm et d'un ciment hautement réfractaire, tel qu'un ciment alumineux, et une couche de ciment réfractaire imperméable aux fluides et recouvrant toutes les surfaces du cœur sauf une destinée à être en contact avec le métal en fusion.

Ces pièces résistent nettement mieux aux variations de température que les qualités frittées mais elles ont un autre défaut. Dans la zone de température comprise entre 300 à 900 °C, les bétons réfractaires alumineux deviennent très friables par manque de liaison céramique. Leur résistance à la compression chute par endroit jusqu'à 2 MPa et même moins.

Dans certains cas, l'érosion mécanique du béton qui n'a pas le temps de fritter est très grande et se traduit, de ce fait, par une usure des pièces perméables plus rapide encore qu'avec des matériaux réfractaires poreux frittés.

On connaît, par ailleurs, par le brevet français 2 359 090, des ciments réfractaires à faible teneur en chaux constitués d'un ciment alumineux, d'une silice vitreuse d'une grosseur de particules comprise entre 100 Å et 0,1 micron, et d'une charge inerte d'une grosseur de particules de 1 à 100 microns, ce ciment contenant moins de 15 % en poids de CaO. Ce ciment peut être mis en œuvre avec une très faible quantité d'eau et est utilisable pour la préparation de bétons réfractaires à propriétés supérieures, par mélange avec divers agrégats, tels que du corindon.

Enfin, le brevet français 1 344 240 a décrit des produits réfractaires poreux à haute réfractairité, obtenus en mélangeant un agrégat réfractaire exempt de fines, tel que de la magnésie, avec un liant hydraulique, tel qu'un aluminate de chaux, et une petite quantité (2 % ou moins) d'une poudre métallique, par exemple de chrome, à mettre en forme le mélange résultant et à le chauffer dans un four avec insufflation d'oxygène ou d'un gaz oxydant de façon à oxyder la poudre métallique (en $Cr_2O_3$ dans le cas de Cr) et que la chaleur dégagée par cette oxydation opère un frittage des grains de l'agrégat.

La présente invention concerne des pièces perméables aux gaz conservant une haute résistance mécanique à chaud entre la prise hydraulique et la céramisation, produites à partir de grains réfractaires d'une granulométrie d'au moins 0,2 mm et d'un ciment alumineux, caractérisées en ce qu'elles sont constituées en poids :

(A) de 60 à 90 % de grains d'une granulométrie de 5 mm à 0,2 mm formés d'une chamotte contenant au moins 42 % d'$Al_2O_3$, de mullite, de gibbsite calcinée à plus de 90 % d'$Al_2O_3$, de corindon fritté ou électrofondu à plus de 95 % d'$Al_2O_3$, de chromite naturelle, de MgO frittée, de sable de zircon et/ou de zircone stabilisée, liés par

(B) de 10 à 40 % d'un ciment ou liant constitué, en poids :

(a) de 10 à 30 % d'un aluminate de calcium,

(b) de 14 à 54 % de $Cr_2O_3$ ayant une grosseur de particules comprise entre 100 Å et 0,1 micron, et

(c) de 14 à 54 % d'alumine ayant une grosseur de particules comprise entre 1 et 100 microns.

Selon un mode de réalisation préféré, la pièce comprend de 75 à 85 % en poids de grains tels que définis ci-dessus en (A), ayant une granulométrie de 0,5 à 1,5 mm, liés par 25 à 15 % de (B).

Ces pièces réfractaires perméables sont, par ailleurs, caractérisées par une perméabilité de 50 à 600 nPm et, de préférence, de 50 à 200 nPm pour les pièces perméables utilisées pour le soufflage des fontes, et de 200 à 600 nPm pour les pièces utilisées pour le soufflage des aciers. Leur résistance à la compression à froid sera supérieure à 20 MPa à la température ambiante et jusqu'à 400 °C, et restera supérieure ensuite à 15 MPa, jusqu'aux températures de 1 200 à 1 400 °C.

Les constituants (A) et (B) de la composition sont malaxés ensemble et humidifiés avec 3 % à 6 % d'eau pour la mise en œuvre de la composition.

Pour faciliter la fluidification de la composition, et de ce fait sa mise en œuvre, on peut ajouter de 0,1 à 1 % d'un défloculant organique ou minéral.

La fabrication des pièces perméables se fait soit par secousses et vibrations, soit par damage manuel de la composition humidifiée dans un récipient métallique généralement conique qui vient s'adapter sur une pièce réfractaire dite de siège maçonnée dans le fond ou la paroi du récipient d'acier ou de fonte. On laisse ensuite la composition faire prise.

Pour indiquer l'usure de la pièce poreuse obtenue, on pourra introduire dans le fond de la pièce perméable une ou plusieurs électrodes reliées à un circuit électrique. Lorsque le métal liquide tel que l'acier ou la fonte, ou encore le laitier existant dans le récipient, viendra au contact de ces électrodes, un circuit électrique se fermera et actionnera un avertisseur.

Les pièces perméables, objet de la présente invention, pourront également être moulées sous d'autres formes, par exemple sous forme de têtes de lances d'insufflation, de pièces cylindriques pleines ou creuses, etc...

Les exemples suivants, non limitatifs, feront mieux comprendre la portée de l'invention :

EXEMPLE 1 :

Pièces perméables à haute teneur en $Al_2O_3$.
Composition :
— 80 parties en poids d'alumine tabulaire (1,2-0,6 mm)
— 5 parties en poids d'alumine Bayer broyée à 5/10 microns
— 10 parties en poids d'oxyde de chrome vert (< 0,1 micron)
— 5 parties en poids de ciment alumineux « Sécar 250 »
— 0,2 partie en poids de polyacrylate d'ammonium (défloculant)
— 4,2 parties en poids d'eau.
Mise en forme : damage manuel dans un cône métallique tronqué - haut : 280 mm - $\varnothing$ supérieur : 60 mm - $\varnothing$ inférieur : 180 mm.
Après prise de 48 h et séchage à 150 °C, les propriétés suivantes ont été obtenues :
— densité apparente : 2,65

— porosité ouverte : 26 %
— résistance à la compression :
— à température ambiante : 40 MPa
— après cuisson à 800 °C : 32 MPa
— à 1 200 °C : 30 MPa
— perméabilité : 400-600 nPm.

EXEMPLE 2 :

Pièces perméables à haute teneur en MgO.
Composition :
— 80 parties en poids de MgO frittée à 98 % de MgO (1,2-0,6 mm)
— 7 parties en poids d'alumine Bayer broyée à 5/10 microns
— 8 parties en poids d'oxyde de chrome vert (< 0,1 micron)
— 5 parties en poids de ciment alumineux « Sécar 250 »
— 0,2 partie en poids de polyacrylate d'ammonium
— 4,6 parties en poids d'eau.
Mise en forme : damage manuel dans un cône métallique tronqué - haut : 280 mm - $\varnothing$ supérieur : 60 mm - $\varnothing$ inférieur : 180 mm.
Après prise de 48 h et séchage à 150 °C, les propriétés suivantes ont été obtenues :
— densité apparente : 2,5
— porosité ouverte : 27 %
— résistance à la compression :
— à la température ambiante : 25 MPa
— après cuisson à 1 000 °C : 20 MPa
— perméabilité à l'air : 400-500 nPm.

**Revendications**

1. Pièces perméables aux gaz conservant une haute résistance mécanique à chaud entre la prise hydraulique et la céramisation, produites à partir de grains réfractaires d'une granulométrie d'au moins 0,2 mm et d'un ciment alumineux, caractérisées en ce qu'elles sont constituées en poids :
(A) de 60 à 90 % de grains d'une granulométrie de 5 mm à 0,2 mm formée d'une chamotte contenant au moins 42 % d'$Al_2O_3$, de mullite, de gibbsite calcinée à plus de 90 % d'$Al_2O_3$, de corindon fritté ou électrofondu à plus de 95 % d'$Al_2O_3$, de chromite naturelle, de MgO frittée, de sable de zircon et/ou de zircone stabilisée, liés par
(B) de 10 à 40 % d'un ciment ou liant constitué, en poids :
(a) de 10 à 30 % d'un aluminate de calcium,
(b) de 14 à 54 % de $Cr_2O_3$ ayant une grosseur de particules comprise entre 100 Å et 0,1 micron, et
(c) de 14 à 54 % d'alumine ayant une grosseur de particules comprise entre 1 et 100 microns.
2. Pièces perméables aux gaz selon la revendication 1, caractérisées en ce que la pièce comprend de 75 à 85 %, en poids, de grains tels que définis en (A) ayant une granulométrie de 0,5 à 1,5 mm, liés par 25 à 15 % de (B).
3. Utilisation des pièces selon la revendication 1 ou 2, pour l'injection d'un gaz dans une masse fondue.

## Claims

1. Gas-permeable parts retaining a high mechanical strength when heated, between hydraulic setting and ceramization, said parts being made from refractory grains having a particle size of at least 0.2 mm and from an aluminous cement, characterized in that they consist by weight of :

(A) 60 to 90 % of grains of a particle size from 5 mm to 0.2 mm formed of a chamotte containing at least 42 % of $Al_2O_3$, mullite, fired gibbsite containing more than 90 % $Al_2O_3$, sintered or fused cast corundun containing more than 95 % $Al_2O_3$, natural chromite, sintered MgO, zircon sand and/or stabilised zirconia, bonded by

(B) 10 to 40 % of a cement or binder consisting by weight of :

(a) 10 to 30 % of a calcium aluminate,

(b) 14 to 54 % of $Cr_2O_3$ having a particle size comprised between 100 Å and 0.1 micron, and

(c) 14 to 54 % alumina having a particle size comprised between 1 and 100 microns.

2. Gas-permeable parts as in Claim 1, which are comprised of 75 to 85 % by weight of granules as defined under (A), having a grain size from 0.5 mm to 1.5 mm, bonded by 25 to 15 % of (B).

3. The use of the parts according to claim 1 or 2, for injecting a gas in a molten mass.

## Ansprüche

1. Gasdurchlässiges Teil mit einer hohen mechanischen Warmfestigkeit zwischen dem hydraulischen Abbinden und der Keramisierung, das aus einem hochschmelzenden Granulat mit Korngrößen von wenigstens 0,2 mm und einem tonerdehaltigen Zement besteht, dadurch gekennzeichnet, daß das Teil folgende Zusammensetzung in Gew. % aufweist :

A) 60-90 % Körner mit einer Korngröße von 5 mm bis 0,2 mm, die aus einem Schamott bestehen, mit wenigstens 42 % $Al_2O_3$, Mullit, gebrannten Gibbsiten mit wenigstens 90 % $Al_2O_3$, aus gesindertem oder elektrogeschmolzenem Korund mit mehr als 95 % $Al_2O_3$, aus natürlichem Chromit aus gesintertem MgO, aus Zirconsand und/oder aus stabilisiertem Zirconoxid, verbunden mit

B) 10-40 % eines Zementes oder Bindemittels, bestehend aus :

a) 10-30 % Calciumaluminat,

b) 14-54 % $Cr_2O_3$ mit einer Partikelgröße zwischen 10 Å und 0,1 μm und

c) 14-54 % Aluminiumoxid mit einer Partikelgröße zwischen 1 und 100 μm.

2. Gasdurchlässiges Teil nach Anspruch 1, dadurch gekennzeichnet, daß das Teil 75-85 Gew. % des unter A) definierten Granulats mit einer Korngrößen-abstufung von 0,5-1,5 mm aufweist, das mit 25-15 % des Bestandteils B) verbunden ist.

3. Verwendung eines gasdurchlässigen Teiles gemäß Anspruch 1 oder 2 für die Einleitung von Gas in eine geschmolzene Masse.